# EUROPEAN PATENT SPECIFICATION

(11) **EP 2 479 520 B1**
(45) Date of publication and mention of the grant of the patent: **04.09.2019**
(21) Application number: 12150530.9
(22) Date of filing: 10.01.2012
(51) Int. Cl.: F25B 41/04, F16K 31/06

(54) **Three-way electromagnetic valve**
Elektromagnetisches Dreiwegeventil
Valve électromagnétique à trois voies

(30) Priority: 24.01.2011 JP 2011011619
(43) Date of publication of application: 25.07.2012
(73) Proprietor: Fujikoki Corporation, Tokyo 158-0082 (JP)
(72) Inventor: Miyamoto, Kazuhiro, Setagaya-ku, Tokyo 158-0082 (JP); Kainuma, Hiroshi, Setagaya-ku, Tokyo 158-0082 (JP); Hayasaka, Masashi, Setagaya-ku, Tokyo 158-0082 (JP)
(74) Representative: Schweiger, Martin

(56) References cited:
- JP-A- H05 180 369
- US-A1- 2002 104 571
- US-A1- 2004 211 477
- US-A1- 2004 255 602

## Description

### BACKGROUND OF THE INVENTION

### Field of the Invention

The present invention relates to a three-way electromagnetic valve which is used for switching a flow path of a cooling medium or the like in an air conditioning apparatus or the like provided with a heat pump apparatus.

### Description of the Conventional Art

Conventionally, in a heat pump apparatus of a heating and cooling system or the like, a flow path of a cooling medium has been switched by arranging respectively electromagnetic valves between a discharge side of a compressor and indoor side and outdoor side heat exchangers, and between an intake side of the compressor and the indoor and outdoor heat exchangers.

However, in the heat pump apparatus mentioned above, since two electromagnetic valves are used, the number of the parts is increased, and an electric power consumption becomes large as well as an increase of an apparatus cost is caused. Therefore, there is such a problem that an operating cost is increased.

Accordingly, a switching valve of a cooling medium flow path described in the Japanese Official Gazette of Patent No. 3413385 (patent document 1) intends to solve the problem mentioned above by integrally providing a pilot electromagnetic valve mechanism which is provided between a compressor and a condenser in one valve main body in an air conditioning apparatus having a hot gas cycle circuit, and shutting off a cooling medium circuit, and a differential pressure valve mechanism which is provided between the compressor and an evaporator, and is actuated at a time when the pilot electromagnetic valve mechanism is closed and a cooling medium pressure of the compressor and a condenser reaches a predetermined differential pressure, and switching the flow path of the cooling medium by one switching valve.

The patent application document US 2002/0104571 discloses an electromagnetic three way valve with a valve chamber, an inlet conduit, two outlet conduits and a movable lifting rod, wherein one end of the lifting rod opens into an actuator. Respective first and second valve members are secured to the lifting rod. First and second valve seats cooperate with the respective valve members. A diameter of the first valve seat can be made smaller than a diameter of the second valve seat.

The patent application documents US 2004/0211477 A1 and JP H05 180369 A disclose similar three-way valves for refrigeration cycles.

The patent application document US 2004/0255602 A1 discloses a vapor-compression refrigerant cycle system, wherein a switching device is provided to switch between a first mode in which high-pressure refrigerant discharged from a compressor is directly introduced to an exterior heat exchanger and a second mode in which the high-pressure refrigerant is directly introduced to an interior heat exchanger. When the second mode is set, the pressure of the high-pressure refrigerant is set higher than a predetermined pressure by a constant pres-sure control valve.

### SUMMARY OF THE INVENTION

However, in the three-way electromagnetic valve such as the switching valve described in the patent document 1 mentioned above, since a high pressure is applied to a portion between a valve body and a valve seat at a time of circulating a liquid having a high pressure at a time of cooling, and a great force is required for a valve opening motion, an electromagnetic coil or the like generating a driving force becomes large in size, and there is such a problem that apparatus and operating costs are increased.

Further, the cooling medium changes to a liquid state, a mixed state of a liquid and a gas and a gas state and a flow rate fluctuates greatly, in each of a cooling time, a dehumidifying time and a heating time, in correspondence to the switching of the cooling and heating operation of the heat pump apparatus, however, since the structure is not made by taking this fluctuation into consideration, a pressure loss becomes greater at a time when a lot of gas cooling medium flows, and there is such a problem that an operating cost is increased.

Accordingly, the present invention is made by taking into consideration the problems in the conventional three-way electromagnetic valve, and an object of the present invention is to provide a three-way electromagnetic valve which can downsize an electromagnetic coil and can hold down a pressure loss even in the case that a lot of gas cooling medium or the like flows.

In order to achieve the object mentioned above, in accordance with the present invention, there is provided a three-way electromagnetic valve according to the appended claim.

In accordance with the present invention, since the valve bore diameter of the first valve seat in which the fluid in the high pressure side flows is made smaller than the valve bore diameter of the second valve seat in which the fluid in the low pressure side flows, a fluid pressure exposure area in a valve opening direction of the first valve body becomes large, and a fluid pressure exposure area in a valve closing direction of the second valve body becomes large, whereby it is possible to make a force which is required for moving the first valve body away from the first valve seat small, at a time of making the fluid in the high pressure side flow out of the first outflow port, and it is possible to downsize the electromagnetic coil which generated the force.

In the three-way electromagnetic valve mentioned above, the second valve body can be structured such as to be energized to the second valve seat side on the basis of a fluid pressure in the inflow port side, at a time of electrifying the electromagnetic coil, and a valve port can be made larger in comparison with a direct acting valve, whereby a pressure loss is lowered, and a system efficiency is improved.

In the three-way electromagnetic valve mentioned above, the structure can be made such that the inflow port communicates with a heat exchanger of a heat pump apparatus, the first outflow port communicates with an expansion mechanism of the heat pump apparatus, and the second outflow port communicates with an intake port of a compressor of the heat pump apparatus. In accordance with this, it is possible to downsize the electromagnetic coil which is provided in the three-way electromagnetic valve for switching the cooling and heating operations of the heat pump apparatus. In conjunction with this, since the cooling medium in the liquid state having a less flow rate and in the mixed state of the liquid and the gas flows in the first outflow port side having the smaller valve bore diameter, and the cooling medium in the gas state having a more flow rate flows in the second outflow port side having the larger bore diameter, at a time when the cooling medium changes to the liquid state, the mixed state of the liquid and the gas and the gas state, in each of the cooling time, the dehumidifying time and the heating time, the valve bore diameter becomes in proportion to the flow rate of the cooling medium, and it is possible to hold down the pressure loss.

### Effect of the Invention

As mentioned above, in accordance with the present invention, it is possible to provide the three-way electromagnetic valve which can downsize the electromagnetic coil, and can hold down the pressure loss even in the case that a lot of gas cooling medium or the like flows.

### BRIEF EXPLANATION OF THE DRAWINGS

Fig. 1 is a cross sectional view showing an embodiment of a three-way electromagnetic valve in accordance with the present invention, in which Fig. 1A shows a no electrifying time, and Fig. 1B shows a time of electrifying an electromagnetic coil; and
Fig. 2 is a view showing a whole structure of a heat pump apparatus using the three-way electromagnetic valve in accordance with the present invention.

### DETAILED DESCRIPTION OF PREFERRED EMBODIMENT

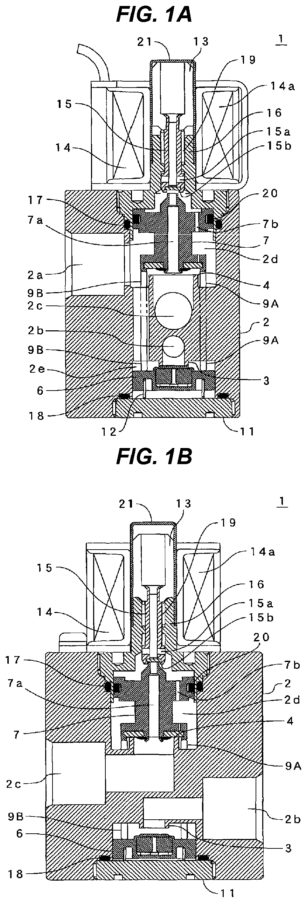

Next, a description will be given in detail of a mode for carrying out the present invention with reference to Fig. 1. In this case, in the following description, a description will be given by exemplifying a case that a three-way electromagnetic valve in accordance with the present invention is used for switching a cooling and heating operation of a heat pump apparatus.

Fig. 1 shows an embodiment of the three-way electromagnetic valve in accordance with the present invention. The three-way electromagnetic valve 1 is provided with a valve main body 2 which has one inflow port 2a, a first outflow port 2b and a second outflow port 2c, and valve chambers 2d and 2e, a first valve seat 3 and a second valve seat 4 which are positioned within the valve main body 2, a first valve body 6 and a second valve body 7 which move close to and away from the valve seats 3 and 4 so as to communicate the inflow port 2a with the outflow ports 2b and 2c, actuation rods (9A and 9B) which are interposed between both the valve bodies 6 and 7 and come into contact with both the valve bodies 6 and 7 in respective end portions so as to serve as a plurality of actuation members, a lid 11 which closes a lower opening of the valve main body 2, a coil spring 12 which is interposed between the lid 11 and the first valve body 6 and energizes the first valve body 6 to the first valve seat 3 side, a valve holder 15 which comes close to and away from the second valve body 7 in a lower end portion, and has a through hole 15a, an electromagnetic coil assembly 14 for moving up and down a plunger 13 which is integrated with the valve holder 15, and the like.

The valve main body 2 is structured such that the second valve body 7 is accommodated in the valve chamber 2d, the first valve body 6 is accommodated in the valve chamber 2e, an upper opening is closed by a suction element 16, and the lower opening is occluded by the lid 11. An O-ring 17 is installed between the suction element 16 and the valve main body 2, and an O-ring 18 is installed between the lid 11 and the valve main body 2, respectively, thereby securing an airtightness of the three-way electromagnetic valve 1.

The first valve body 6 is energized upward by the coil spring 12, and seats on the first valve seat 3 on the basis of an elastic force of the coil spring 12 at a no electrifying time in Fig. 1A. A lower end portion of the actuation rod 9 comes into contact with an upper surface of the first valve body 6. A bore diameter of the first valve seat 3 on which the first valve body 6 seats is set smaller than a bore diameter of the second valve seat 4 on which the second valve body 7 seats.

The second valve body 7 is provided with two through holes 7a and 7b which pass through in a vertical direction, and a piston ring 20 is installed between the second valve body 7 and the suction element 16.

The actuation rods 9 (9A and 9B) are provided in such a manner as to be movable in the vertical direction by an insertion hole (not shown) which passes through the valve main body 2 within the valve chamber 2d, and is pinched by both the valve bodies 6 and 7 as mentioned above. In this case, two actuation rods 9 exist in the illustrated embodiment, however, the number of the actuation rods 9 is only limited by the appended claim.

The valve holder 15 is integrally formed with the plunger 13, and has a through hole 15a which is extended in a horizontal direction in a lower end portion.

The plunger 13 is accommodated within a cylindrical pipe 21 so as to be movable up and down, and is energized upward by a coil spring 19 which is interposed between the plunger 13 and the suction element 16. The plunger 13 is sucked by the suction element 16 so as to move down at a time of electrifying an electromagnetic coil 14a of the electromagnetic coil assembly 14.

Next, a description will be given of an actuation of the three-way electromagnetic valve 1 having the structure mentioned above with reference to Fig. 1.

In the case that the electromagnetic coil 14a is not electrified, the first valve body 6 is energized upward by the coil spring 12 so as to seat on the first valve seat 3, and the second valve body 7 moves upward via the first valve body 6 and the actuation rods 9 so as to be away from the valve seat 4, as shown in Fig. 1A. In accordance with this, the fluid flows to the second outflow port 2c from the inflow port 2a via the valve chamber 2d.

Next, if the electromagnetic coil 14a is electrified, the plunger 13 is sucked by the suction element 16 so as to move down, and the valve holder 15 also moves down in conjunction with this. Just after the valve holder 15 moves down, a lower end portion 15b of the valve holder 15 comes into contact with an upper end portion of the through hole 7a so as to occlude the upper opening, and a through hole 15a of the valve holder 15 communicates with the valve chamber 2d, whereby a fluid pressure in a side of the inflow port 2a is applied to the second valve body 7 in a direction of moving down the second valve body 7, and smoothly moves down the second valve body 7 in cooperation with the downward movement of the plunger 13, and the second valve body 7 finally seats on the valve seat 4.

In conjunction with the movement of the plunger 13, the valve holder 15 and the second valve body 7, the plurality of actuation rods 9 move down, whereby the first valve body 6 also moves down, and is away from the first valve seat 3. In accordance with this, the fluid flows to the first outflow port 2b from the inflow port 2a via the valve chamber 2e.

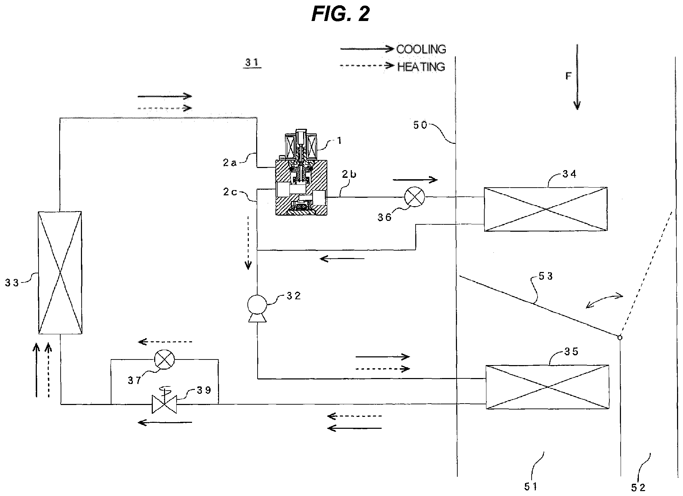

Next, a description will be given of a cooling and heating system (a heat pump apparatus) 31 which uses the three-way electromagnetic valve 1 having the structure mentioned above mainly with reference to Fig. 2.

The cooling and heating system 31 employs, for example, HFC-134a or HFO-1234yf as a cooling medium, and is constructed by a compressor 32, an outdoor side heat exchanger 33, a first indoor side heat exchanger 34, a second indoor side heat exchanger 35, a first expansion mechanism 36, a second expansion mechanism 37, the three-way electromagnetic valve 1 which switches a cooling medium flow path from the outdoor side heat exchanger 33 to the first expansion mechanism 36 or the compressor 32, and an electromagnetic valve 39 which is arranged in the cooling medium flow path from the second indoor side heat exchanger 35 to the outdoor side heat exchanger 33. In this case, the three-way electromagnetic valve 1 is connected in such a manner that the inflow port 2a shown in Fig. 1 communicates with the outdoor side heat exchanger 33, the first outflow port 2b communicates with the first expansion mechanism 36, and the second outflow port 2c communicates with the suction port of the compressor 32.

Next, a description will be given of a motion of the cooling and heating system having the structure mentioned above.

First of all, a description will be given of a motion at a time of heating. The electromagnetic coil 14a of the three-way electromagnetic valve 1 is not electrified so as to set a state in Fig. 1A, the cooling medium flow path from the outdoor side heat exchanger 33 to the compressor 32 via the inflow port 2a and the second outflow port 2c is set to an open state, the cooling medium flow path from the first outflow port 2b to the first expansion mechanism 36 is set to a closed state, and the electromagnetic valve 39 is closed. In accordance with this, the cooling medium discharged from the compressor 32 is introduced into the outdoor side heat exchanger 33 via the second indoor side heat exchanger 35 and the second expansion mechanism 37, and thereafter comes back to the compressor 32. In this case, the outdoor side heat exchanger 33 serves as an evaporator, and the second indoor side heat exchanger 35 serves as a condenser, thereby achieving such a heating operation that a wind flowing within a duct 50 in a direction of an arrow F is heated by the second indoor side heat exchanger 35 so as to be spouted into a passenger room from a hot wind passage 51. In this case, reference numeral 53 denotes a damper, a broken line indicates a position at the heating time, and a solid line indicates a position at the cooling time. Further, at this time, since a gaseous cooling medium flows in the three-way electromagnetic valve 1 from the inflow port 2a to the second outflow port 2c in a large bore diameter side, it is possible to hold down a pressure loss and this structure is preferable.

Next, a description will be given of a motion at a time of cooling. The electromagnetic coil 14a of the three-way electromagnetic valve 1 is electrified so as to set a state in Fig. 1B, the cooling medium flow path from the outdoor side heat exchanger 33 to the first expansion mechanism 36 via the inflow port 2a and the first outflow port 2b is set to an open state, the cooling medium flow path from the second outflow port 2c to the compressor 32 is set to a closed state, and the electromagnetic valve 39 is opened. In accordance with this, the cooling medium discharged from the compressor 32 is introduced into the outdoor side heat exchanger 33 via the second indoor side heat exchanger 35 and the electromagnetic valve 39, and thereafter comes back to the compressor 32 via the first expansion mechanism 36 and the first indoor side heat exchanger 34. In this case, the outdoor side heat exchanger 33 serves as the condenser and the first indoor side heat exchanger 34 serves as the evaporator, thereby achieving such a cooling operation that the wind flowing within the duct 50 in the direction of the arrow F is cooled by the first indoor side heat exchanger 34 so as to be spouted into the passenger room from a cool wind passage 52. Further, at this time, since a liquid cooling medium flows in the three-way electromagnetic valve 1 from the inflow port 2a to the first outflow port 2b in a small bore diameter side, it is possible to select a valve bore diameter in correspondence to a cooling medium flow rate and this structure is preferable.

In this case, in the embodiment mentioned above, there is exemplified the pilot type three-way electromagnetic valve 1 having the valve holder 15, however, the pilot mechanism is not an essential constructing element, but it is possible to employ a direct acting mechanism which makes the second valve body 7 seat on the second valve seat 4 only on the basis of a suction force of the suction element 16. Further, the kind of the cooling medium flowing in the cooling and heating system 31 is not particularly limited.

## Claims

1. A three-way electromagnetic valve (1) comprising:
a valve main body (2) provided with an inflow port (2a) for communicating with a heat exchanger (33) of a heat pump apparatus (31), a first outflow port (2b) for communicating with an expansion mechanism (36) of said heat pump apparatus (31), a second outflow port (2c) for communicating with an intake port of a compressor (32) of said heat pump apparatus (31),
a first valve seat (3) positioned between said inflow port (2a) and said first outflow port (2b), and
a second valve seat (4) positioned between said inflow port (2a) and said second outflow port (2c), the second valve seat (4) being arranged so that a valve bore of the second valve seat (4) and a valve bore of the first valve seat (3) are opposed to each other and are positioned between the first valve seat (3) and the second valve seat (4);
a first valve body (6) arranged at an opposed position with respect to said first valve seat (3) within said valve main body (2);
a coil spring (12) interposed between a lid (11) closing a lower opening of the valve main body (2) and the first valve body (6) and provided to bias said first valve body (6) toward said first valve seat (3);
a second valve body (7) having two through-holes (7a, 7b), the second valve body (7) being arranged at an opposed position with respect to said second valve seat (4) within said valve main body (2);
an electromagnetic coil (14a) provided to enable closing of one through-hole (7a) of the two through-holes (7a, 7b) provided in the second valve body (7); and
at least two actuating members (9, 9A, 9B) interposed between said first valve body (6) and said second valve body (7),
wherein the first valve seat (3) is communicated, at a side (2e) of the first valve body (6), with the inflow port (2a), and the second valve seat (4) is communicated, at the second valve body (7), with the inflow port (2a),
wherein the first valve seat (3) is communicated, at a side of the valve bore thereof, with the first outflow port (2b), and the second valve seat (4) is communicated, at a side of the valve bore thereof, with the second outflow port (2c),
wherein the seating of said second valve body (7) on said second valve seat (4) is carried out by energizing said electromagnetic coil (14a), and the seating of said first valve body (6) on said first valve seat (3) is carried out by de-energizing the electromagnetic coil (14a) and by a biased force of said coil spring (12),
wherein when the second valve body (7) is seated on said second valve seat (4), a movement of the second valve body (7) is transmitted via said at least two actuating members (9, 9A, 9B) to the first valve body (6), causing the first valve body (6) to move away from the first valve seat (3), and
wherein the valve bore diameter of said first valve seat (3) is made smaller than the valve bore diameter of said second valve seat (4).

## Patentansprüche

1. Ein elektromagnetisches Dreiwege-Ventil (1), das aufweist:
einen Ventilhauptkörper (2), der mit einer Einströmöffnung (2a) zum Kommunizieren mit einem Wärmetauscher (33) eines Wärmepumpengerätes (31), mit einer ersten Ausströmöffnung (2b) zum Kommunizieren mit einer Expansionsvorrichtung (36) des Wärmepumpengerätes (31) und mit einer zweiten Ausströmöffnung (2c) zum Kommunizieren mit einer Einlassöffnung eines Kompressors (32) des Wärmepumpengeräts (31) versehen ist,
ein erster Ventilsitz (3), der zwischen der Einströmöffnung (2a) und der ersten Ausströmöffnung (2b) angeordnet ist, und ein zweiter Ventilsitz (4), der zwischen der Einströmöffnung (2a) und der zweiten Ausströmöffnung (2c) angeordnet ist, wobei der zweite Ventilsitz (4) so angeordnet ist, dass eine Ventilbohrung des ersten Ventilsitzes (4) und eine Ventilbohrung des ersten Ventilsitzes (3) einander gegenüberliegen und zwischen dem ersten Ventilsitz (3) und dem zweiten Ventilsitz (4) angeordnet sind;
ein erster Ventilkörper (6) der an einer in Bezug auf den ersten Ventilsitz (3) gegenüberliegenden Position in dem ersten Ventilhauptkörper (2) angeordnet ist;
eine Schraubenfeder (12), die zwischen einem Deckel (11), der eine untere Öffnung des Ventilhauptkörpers (2) schließt, und dem ersten Ventilkörper (6) dazwischengesetzt ist, und die so vorgesehen ist, dass der erste Ventilkörper (6) in Richtung auf den ersten Ventilsitz (3) vorgespannt ist;
ein zweiter Ventilkörper (7) mit zwei Durchgangsöffnungen (7a, 7b), wobei der zweite Ventilkörper (7) an einer gegenüberliegenden Position in Bezug auf den zweiten Ventilsitz (4) in dem zweiten Ventilhauptkörper (2) angeordnet ist;
eine elektromagnetische Spule (14a), die vorgesehen ist, ein Schließen eines der Durchgangsöffnungen (7a) der beiden Durchgangsöffnungen (7a, 7b) zu ermöglichen, die in dem zweiten Ventilkörper (7) vorgesehen ist, und mindestens zwei Betätigungselemente (9, 9A, 9B), die zwischen den ersten Ventilkörper (6) und den zweiten Ventilkörper (7) dazwischengesetzt sind,
wobei der erste Ventilsitz (3) an einer Seite (2e) des ersten Ventilkörpers (6) mit der Einströmöffnung (2a) in Verbindung gebracht ist, und der zweite Ventilsitz (4) an dem zweiten Ventilkörper (7) mit der Einströmöffnung (2a) in Verbindung gebracht ist,
wobei der erste Ventilsitz (3) an einer Seite von dessen Ventilbohrung mit der ersten Ausströmöffnung (2b) in Verbindung gebracht ist, und der zweite Ventilsitz (4) an einer Seite von dessen Ventilbohrung mit der zweiten Ausströmöffnung (2c) in Verbindung gebracht ist,
wobei das Sitzen des zweiten Ventilkörpers (7) auf dem zweiten Ventilsitz (4) durch ein Beaufschlagen der elektromagnetischen Spule (14a) ausgeführt wird, und wobei das Sitzen des ersten Ventilkörpers (6) auf dem ersten Ventilsitz (3) durch Abschalten einer Beaufschlagung der elektromagnetischen Spule (14a) und durch eine Vorspannungskraft der Spiralfeder (12) ausgeführt wird,
wobei, wenn der zweite Ventilkörper (7) auf dem zweiten Ventilsitz (4) aufsitzt, eine Bewegung des zweiten Ventilkörpers (7) über die mindestens zwei Betätigungselemente (9, 9A, 9B) auf den ersten Ventilkörper (6) übertragen wird, wodurch der Ventilkörper (6) sich von dem ersten Ventilsitz (3) wegbewegt, und
wobei der Durchmesser der Ventilbohrung des ersten Ventilsitzes (3) kleiner ausgeführt ist als der Durchmesser der Ventilbohrung des zweiten Ventilsitzes (4) .

## Revendications

1. Une valve électromagnétique à trois voies (1) comprenant:
un corps principal de valve (2) qui est pourvu d'un port d'entrée (2a) pour communiquer avec un échangeur de chaleur (33) d'un dispositif de pompe à chaleur (31), d'un premier port de sortie (2b) pour communiquer avec un mécanisme d'expansion (36) du dispositif de pompe à chaleur (31), et d'un second port de sortie (2c) pour communiquer avec un port d'admission d'un compresseur (32) du dispositif de pompe à chaleur (31),
un premier siège de valve (3) positionné entre le port d'entrée (2a) et le premier port de sortie (2b), et un second siège de valve (4) positionné entre le port d'admission (2b) et le second port de sortie (2c), le second siège de valve (4) étant arrangée de sorte qu'un alésage du second siège de valve (4) et un alésage du premier siège de valve (3) sont opposés, l'un par rapport à l'autre, et sont positionnés entre le premier siège de valve (3) et le second siège de valve (4);
un premier corps de valve (6) arrangé à une position opposée par rapport au premier siège de valve (3) dedans le corps principal de valve (2);
un ressort hélicoïdal (12) qui est interposé entre un couvercle (11), le couvercle (11) fermant une ouverture inférieure du corps principal de valve (2), et le premier corps de valve (6), et qui est pourvu de sorte que le premier corps de valve (6) est préchargé vers le premier siège de valve (3);
un second corps de valve (7) ayant des ouvertures de passage (7a, 7b), le second corps de valve (7) étant arrangé à une position opposée par rapport au second siège de valve (4) dedans le corps principal de valve (2);
une bobine électromagnétique (14a) pourvue afin de faciliter la fermeture d'une ouverture de passage (7a) des deux ouvertures de passage (7a, 7b) pourvues dans le second corps de valve (7); et au moins deux membres d'actuation interposés entre le premier corps de valve (6) et le second corps de valve (7),
dans laquelle le premier siège de valve (3) est communiqué avec le port d'entrée (2a) à un côté (2e) du premier corps de valve (6), et le second siège de valve (4) est communiqué, au lieu du second corps de valve (7), avec le port d'entrée (2a),
dans laquelle le premier siège de valve (3) est communiqué, au côté d'un alésage de ceci, avec le premier port de sortie (2b), et le second siège de valve (4) est communiqué, au côté d'un alésage de ceci, avec le second port de sortie (2c),
dans laquelle le placement du second corps de valve (7) sur le second siège de valve (4) est réalisée par alimenter la bobine électromagnétique (14a), et le placement du premier corps de valve (6) sur le premier siège de valve (3) est réalisée par enlever la alimentation de la bobine électromagnétique (14a) et par une force de pré-chargement du ressort hélicoïdal (12),
dans laquelle le second corps de valve (7) est assis sur le second siège de valve (4), et un mouvement du second corps de valve (7) est transmis par les au moins deux éléments d'actuations (9, 9A, 9B) au premier corps de valve (6), ainsi causant que le premier corps de valve (6) s'éloigne du premier siège de valve (3), et
dans laquelle le diamètre d'alésage du premier siège de valve (3) est rendu plus étroit que le diamètre d'alésage du second siège de valve (4).
